# EUROPÄISCHE PATENTSCHRIFT

(11) **EP 2 858 843 B1**
(45) Veröffentlichungstag und Bekanntmachung des Hinweises auf die Patenterteilung: **27.07.2016**
(21) Anmeldenummer: 13720417.8
(22) Anmeldetag: 06.05.2013
(51) Int. Cl.: B60H 1/22

(54) **VERFAHREN ZUR AKTIVIERUNG ODER DEAKTIVIERUNG VON FUNKTIONEN UND VORRICHTUNG ZUR BEEINFLUSSUNG VON FUNKTIONEN IN EINEM KRAFTFAHRZEUG**
METHOD FOR ACTIVATING OR DESACTIVATING FUNCTIONS AND FUNCTIONS MODIFICATING DEVCE FOR A VEHICLE
PROCÉDÉ POUR ACTIVER OU DÉSACTIVER DES FONCTIONS ET DISPOSITIF DE MODIFICATION DE FONCTIONS POUR VÉHICULE

(30) Priorität: 09.06.2012 DE 102012011483
(43) Veröffentlichungstag der Anmeldung: 15.04.2015
(73) Patentinhaber: Volkswagen Aktiengesellschaft, 38440 Wolfsburg (DE)
(72) Erfinder: BARTOSZEWSKI, Heiner, 38518 Gifhorn (DE); VUJASINOVIC, Mirko, 38446 Wolfsburg (DE)
(86) Internationale Anmeldenummer: PCT/EP2013/059368
(87) Internationale Veröffentlichungsnummer: WO 2013/182363

(56) Entgegenhaltungen:
- EP-A1- 1 650 074
- DE-A1- 10 256 536
- DE-A1-102006 038 522
- DE-A1-102006 056 115
- US-A1- 2004 204 816

## Beschreibung

Die Erfindung betrifft ein Verfahren zur Aktivierung oder Deaktivierung von Funktionen in einem Kraftfahrzeug und eine Vorrichtung zur Beeinflussung von Funktionen in einem Kraftfahrzeug.

In Kraftfahrzeugen können Funktionen aktiviert oder deaktiviert werden, ohne dass eine Nutzeraktion am Kraftfahrzeug erfolgt. Dies kann beispielsweise über eine in einem Kraftfahrzeugschlüssel integrierte Fernbedienung erfolgen. Des Weiteren ist es angedacht worden, dass der Nutzer über eine Online-Verbindung direkt oder über einen Server mit dem Kraftfahrzeug kommunizieren kann. Schließlich sind auch Funktionen in einem Kraftfahrzeug bekannt, die eine Timer-Programmierung aufweisen, sich also zu einer bestimmten Zeit selbsttätig aktivieren oder deaktivieren. Beispielsweise sind Standheizungen mit Timer-Programmierung bekannt.

Aus der DE 10 2006 038 522 A1 ist ein Verfahren zur Vermeidung unzulässiger Betriebsmodi bei einer Fahrdynamikregelung in einem Kraftfahrzeug bekannt, wobei sich die Fahrdynamikregelung zwischen einem für den Straßenbetrieb des Kraftfahrzeuges vorgesehenen ersten Betriebsmodus und einem zum Betreiben des Kraftfahrzeuges auf einem Rollenprüfstand vorgesehenen zweiten Betriebsmodus umschalten lässt, wobei eine Fahrerwarnung ausgelöst wird, wenn bei eingeschaltetem zweiten Betriebsmödus festgestellt wird, dass ein auf einem beabsichtigten Straßenbetrieb des Kraftfahrzeugs hinweisendes Prüfkriterium erfüllt ist. US 2004/0204816A offenbart einen Gegenstand nach dem Obergriff der Ansprüche 1 und 9.

Der Erfindung liegt das technische Problem zugrunde, ein Verfahren zur Aktivierung oder Deaktivierung von Funktionen sowie eine Vorrichtung zur Beeinflussung von Funktionen in einem Kraftfahrzeug zu schaffen, mittels derer die Handhabung des Kraftfahrzeugs, insbesondere in einer Werkstatt, verbessert wird.

Die Lösung des technischen Problems ergibt sich durch die Gegenstände mit den Merkmalen der Ansprüche 1 und 9. Weitere vorteilhafte Ausgestaltungen der Erfindung ergeben sich aus den Unteransprüchen.

Das Verfahren zur Aktivierung oder Deaktivierung von Funktionen in einem Kraftfahrzeug, wobei über mindestens eine Schnittstelle ein Steuersignal zur Aktivierung öder Deaktivierung mindestens einer Funktion eingebbar ist, wobei mindestens eine Funktion eine Timer-Programmierung umfasst und/oder mindestens eine Funktion über eine Kommunikationsschnittstelle fernbedienbar von außerhalb des Kraftfahrzeugs aktiviert oder deaktiviert werden kann, umfasst den Verfahrensschritt, dass über mindestens eine Schnittstelle mindestens ein Steuerbefehl eingegeben wird, mittels dessen eine Aktivierung oder Deaktivierung der Funktion über die Timer-Programmierung und/oder über die Kommunikationsschnittstelle gesperrt wird. Eine manuelle Aktivierung oder Deaktivierung über die Schnittstelle kann dabei jedoch weiter möglich sein. Insbesondere bei Werkstattarbeiten kann somit zuverlässig verhindert werden, dass unvermittelt Funktionen aktiviert oder deaktiviert werden, was zu Irritationen des Werkstattpersonals führen könnte und/oder den Werkstattablauf stören könnte. Dabei kann die Schnittstelle für den Steuerbefehl der Sperrung der Funktion die gleiche Schnittstelle sein, über die die Funktion aktiviert oder deaktiviert wird, muss es aber nicht sein. Häufig geht es darum, eine Aktivierung der Funktion zu verhindern, wobei dann die Sperrung eine zunächst nicht aufhebbare Deaktivierung ist. Es sind jedoch auch Fälle möglich, wo es allgemein keine unerklärliche Zustandsänderung geben soll, sodass auch eine Deaktivierung über den Timer oder die Kommunikationsschnittstelle verhindert werden soll. Daher umfasst der Begriff Sperrung eine Deaktivierung der Funktion, kann aber auch umfassender sein (Sperrung von Aktivierung und Deaktivierung). Denkbar ist auch eine Ausführungsform, wo nur die Deaktivierung oder nur die Aktivierung der Funktionen gesperrt ist. Die Sperrung der Funktionen erfolgt vorzugsweise in einer Werkstatt, ist aber auf diesen Einsatz nicht beschränkt.

Dabei kann weiter vorgesehen sein, dass durch den Steuerbefehl alle Funktionen mit Timer-Programmierung und/oder die Funktion, die über die Kommunikationsschnittstelle fernbedienbar sind, gesperrt werden. Vorzugsweise ist jedoch eine abgestufte Sperrung möglich, d.h. Funktionen können einzeln, gruppenweise oder insgesamt gesperrt werden. Somit ist es beispielsweise möglich, eine einzelne Funktion mit Timer-Programmierung zu untersuchen, wohingegen die übrigen Funktionen mit Timer-Programmierung gesperrt sind. Weiter kann vorgesehen sein, dass die Sperrung eine Authentifizierung erfordert, beispielsweise mittels eines Passwortes oder PINs.

In einer weiteren Ausführungsform ist die Schnittstelle zur Sperrung der Funktion als Fahrzeugdiagnoseschnittstelle und/oder als Bedienschnittstelle im Kraftfahrzeug ausgebildet.

In einer weiteren Ausführungsform wird der Steuerbefehl zur Sperrung der Funktion zentral einem Steuergerät im Kraftfahrzeug übermittelt, wobei dieses Steuergerät die betroffenen Steuergeräte zur Durchführung der zu sperrenden Funktionen informiert, was vorzugsweise über ein Fahrzeugbussystem wie beispielsweise einen CAN- oder FlexRay-Bus erfolgt.

In einer alternativen Ausführungsform werden über den oder die Steuerbefehle die betroffenen Steuergeräte zur Durchführung der zu sperrenden Funktionen direkt informiert.

In einer weiteren Ausführungsform ist das Kraftfahrzeug über die Kommunikationsschnittstelle mit einem externen Server verbunden, wobei die Sperrung der Funktionen über den Server erfolgt. Im einfachsten Fall unterbricht hierzu der Server nur die Kommunikation mit der Kommunikationsschnittstelle. Über den Server können dann allerdings nicht die Funktionen mit einer Timer-Programmierung gesperrt werden, sondern nur der externe Zugriff gesperrt werden. Die Mitteilung zur Sperrung an den Server kann dabei durch eine beliebige Datenübertragungsstrecke erfolgen oder aber über den Kommunikationskanal zwischen Kraftfahrzeug und Server.

In einer weiteren Ausführungsform wird die Sperrung von Funktionen im Kraftfahrzeug und/oder in einem externen Fahrzeugdiagnosesystem und/oder über die Kommunikationsschnittstelle signalisiert, sodass im letzten Fall die Sperrung an dem externen Server und/oder einem Rechnerarbeitsplatz eines Nutzers angezeigt werden kann.

In einer weiteren Ausführungsform ist in dem Kraftfahrzeug und/oder im Fahrzeugdiagnosesystem ein Modul abgelegt, mittels dessen Funktionen mit Timer-Programmierung und/oder Funktionen, die über die Kommunikationsschnittstelle aktivierbar sind, ermittelt werden. Dies ist vorteilhaft, da durch Nachrüstungen sich der Aufbau des Kraftfahrzeugs verändern kann, sodass beispielsweise das Fahrzeugdiagnosesystem aus den Angaben des Herstellers noch nicht alle betroffenen Funktionen ermitteln kann.

In einer weiteren Ausführungsform wird über einen weiteren Steuerbefehl die Sperrung der Funktionen aufgehoben. Dies erfolgt beispielsweise analog dem Vorgehen bei der Sperrung über die gleiche Schnittstelle.

In einer weiteren Ausführungsform wird die Sperrung in Abhängigkeit mindestens eines Parameters automatisch aufgehoben. Somit wird sichergestellt, dass der Kraftfahrzeugführer wieder die Funktionen nutzen kann, auch wenn beispielsweise der Werkstattmitarbeiter die Entsperrung vergessen hat. Die Parameter können beispielsweise die Fahrzeuggeschwindigkeit, eine zurückgelegte Fahrstrecke, ein bestimmter verwendeter Fahrzeugschlüssel oder ein ähnlicher Parameter sein, aus dem auf die Nutzung durch den Kraftfahrzeugführer geschlossen werden kann. Auch Kombinationen von Parametern sind möglich.

Die Vorrichtung zur Beeinflussung von Funktionen in einem Kraftfahrzeug ist dadurch gekennzeichnet, dass mittels der Vorrichtung mindestens ein Steuerbefehl generierbar ist, mittels dessen mindestens eine Funktion mit Timer-Programmierung und/oder mindestens eine Funktion, die über eine Kommunikationsschnittstelle fernbedienbar von außerhalb des Kraftfahrzeugs aktiviert oder deaktiviert werden kann, sperrbar sind.

Die Erfindung wird nachfolgend anhand eines bevorzugten Ausführungsbeispiels näher erläutert. Die einzige Figur zeigt einen schematischen Aufbau zur Durchführung des erfindungsgemäßen Verfahrens.

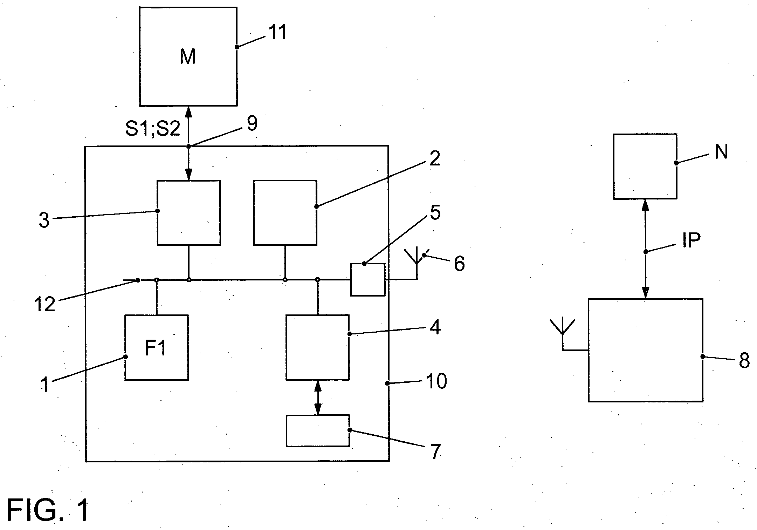

In der Fig. 1 ist schematisch ein Kraftfahrzeug 10 dargestellt, das fünf Steuergeräte 1 bis 5 aufweist. Die Steuergeräte 1-5 sind über mindestens einen Fahrzeugbus 12 miteinander verbunden, wobei üblicherweise die Steuergeräte 1-5 in verschiedenen Fahrzeugbussen angeordnet sind, die über Gateway-Steuergeräte miteinander verbunden sind. Weiter ist der Fahrzeugbus 12 über das Steuergerät 5 mit einer Kommunikationsschnittstelle 6 in Form einer Antenne verbunden. Das Steuergerät 5 routet dabei im einfachsten Fall Daten zwischen den Kommunikationskanälen (z. B. CAN vom Fahrzeugbus 12 und WLAN von der Kommunikationsschnittstelle 6). Es kann jedoch auch eine zusätzliche Funktionsschicht im Steuergerät 5 vorgesehen sein. Das erste Steuergerät 1 ist beispielsweise das Steuergerät einer Standheizung, die mittels einer Timer-Programmierung selbständig ein- und ausgeschaltet werden kann. Alternativ kann die Standheizung mittels eines Bedienelements im Kraftfahrzeug 10 manuell ein- und ausgeschaltet werden. Das Bedienelement kann dabei Bestandteil einer Anzeige- und Bedieneinheit 7 sein, die von dem vierten Steuergerät 4 angesteuert wird. Die Funktion mit Timer-Programmierung ist hier mit F1 bezeichnet. Dabei kann zusätzlich vorgesehen sein, dass die Timer-Programmierung von dem Nutzer N über die Kommunikationsschnittstelle 6 erfolgen kann. Das zweite Steuergerät 2 führt eine Funktion F2 aus, die über die Kommunikationsschnittstelle 6 fernbedienbar ist. Hierzu kann der Nutzer N entweder direkt über die Kommunikationsschnittstelle 6 Steuerbefehle an das Steuergerät übertragen (z.B. über WLAN) oder mittelbar über einen externen Server 8, der beispielsweise vom Kraftfahrzeughersteller verwaltet wird. Dabei kann die Verbindung zwischen Nutzer N und externen Server 8 beispielsweise eine Internetverbindung IP sein. Das dritte Steuergerät 3 weist eine Fahrzeugdiagnoseschnittstelle 9 auf, an die ein Fahrzeugdiagnosesystem 11 angeschlossen werden kann.

Kommt nun das Kraftfahrzeug 10 in eine Werkstatt, so wird das Fahrzeugdiagnosesystem 11 an die Fahrzeugdiagnoseschnittstelle 9 angeschlossen. Mittels eines Moduls M durchsucht das Fahrzeugdiagnosesystem 11 das Kraftfahrzeug 10 nach Funktionen F1 mit Timer-Programmierung und nach Funktionen F2, die über die Kommunikationsschnittstelle 6 fernbedienbar sind. Die gefundenen Funktionen F1, F2 werden dann beispielsweise auf einer Anzeigeeinheit des Fahrzeugdiagnosesystems 11 dargestellt und einzeln, gruppenweise oder insgesamt gesperrt. Hierzu überträgt das Fahrzeugdiagnosesystem 11 einen Steuerbefehl S1 an das dritte Steuergerät 3. Das dritte Steuergerät 3 überträgt dann an das erste und zweite Steuergerät 1, 2 eine Information, dass die Funktionen F1, F2 gesperrt sind. Als Reaktion führt das erste Steuergerät 1 den Timervorgang nicht aus. Ebenso ignoriert das zweite Steuergerät 2 Steuerbefehle, die es über die Kommunikationsschnittstelle 6 erhält. Die Sperrung der Funktionen F1, F2 in den Steuergeräten 1, 2 kann beispielsweise durch Setzen eines Bits erfolgen. Die erfolgte Sperrung kann dann im Fahrzeugdiagnosesystem 11 und/oder auf der Anzeige- und Bedieneinheit 7 dargestellt werden. Auch ist eine Übermittlung einer Information an die Kommunikationsschnittstelle 6 bzw. das Steuergerät 5 möglich, die eine Übermittlung von Steuerbefehlen für die Funktionen F1 und F2 sperrt. Des Weiteren kann über die Kommunikationsschnittstelle 6 der Server 8 oder der Nutzer N direkt über die Sperrung informiert werden. Die Sperrung kann dabei je nach Ausführungsform und Funktion bewirken, dass die Funktion weder aktiviert noch deaktiviert werden kann, also ihren gegenwärtigen Zustand behält. Alternativ kann vorgesehen sein, dass die Funktion nur nicht aktiviert werden kann. Nach erfolgter Wartung des Kraftfahrzeugs 10 kann die Sperrung der Funktionen F1, F2 durch das Fahrzeugdiagnosesystem 11 durch einen Steuerbefehl S2 wieder zurückgesetzt werden. Entsprechend wird die Entsperrung signalisiert. Anschließend wird das Fahrzeugdiagnosesystem 11 von der Fahrzeugdiagnoseschnittstelle 9 entfernt. Vergisst hingegen das Werkstattpersonal, die Entsperrung vorzunehmen, kann dies automatisch durch das dritte Steuergerät 3 erfolgen, das hierzu Parameter auswertet, aus denen auf die Beendigung des Werkstattaufenthalts geschlossen werden kann. Alternativ oder kumulativ kann die Sperrung oder Entsperrung der Funktionen F1, F2 auch über die Anzeige- und Bedieneinheit 7 oder den externen Server 8 erfolgen.

## Patentansprüche

1. Verfahren zur Aktivierung oder Deaktivierung von Funktionen in einem Kraftfahrzeug (10), wobei über mindestens eine Kommunikationsschnittstelle (6) ein Steuersignal zur Aktivierung oder Deaktivierung mindestens einer Funktion eingebbar ist, wobei mindestens eine Funktion (F1) eine Timer-Programmierung umfasst und/oder mindestens eine Funktion (F2) über die Kommunikationsschnittstelle (6) fernbedienbar von außerhalb des Kraftfahrzeugs (10) aktiviert oder deaktiviert werden kann, wobei über mindestens eine Schnittstelle mindestens ein Steuerbefehl (S1) eingegeben wird, mittels dessen eine Aktivierung oder Deaktivierung der Funktion (F1, F2) über die Timer-Programmierung und/oder über die Kommunikationsschnittstelle (6) gesperrt wird,
**dadurch gekennzeichnet, dass** mittels eines
im Kraftfahrzeug (10) und/oder im Fahrzeugdiagnosesystem (11) abgelegten Moduls Funktionen (F1) mit Timer-Programmierung und/oder Funktionen (F₂), die über die Kommunikationsschnittstelle (6) aktivierbar sind, ermittelt werden.

2. Verfahren nach Anspruch 1, **dadurch gekennzeichnet, dass** die Schnittstelle zur Sperrung der Funktionen als Fahrzeugdiagnoseschnittstelle, (9) und/oder als Bedienschnittstelle im Kraftfahrzeug ausgebildet ist.

3. Verfahren nach Anspruch 1 oder 2, **dadurch gekennzeichnet, dass** der Steuerbefehl (S1) zur Sperrung der Funktionen (F1, F2) zentral einem Steuergerät (3) im Kraftfahrzeug (10) übermittelt wird, wobei dieses Steuergerät (3) die betroffenen Steuergeräte (1, 2) zur Durchführung der zu sperrenden Funktionen (F1, F2) informiert.

4. Verfahren nach Anspruch 1 oder 2, **dadurch gekennzeichnet, dass** über den oder die Steuerbefehle (S1) die betroffenen Steuergeräte (1, 2) zur Durchführung der zu sperrenden Funktionen (F1, F2) direkt informiert werden.

5. Verfahren nach einem der vorangegangenen Ansprüche, **dadurch gekennzeichnet, dass** das Kraftfahrzeug (10) über die Kommunikationsschnittstelle (6) mit einem externen Server (8) verbunden ist, wobei die Sperrung der Funktion (F1, F2) über den Server (8) erfolgt.

6. Verfahren nach einem der vorangegangenen Ansprüche, **dadurch gekennzeichnet, dass** die Sperrung von Funktionen (F1, F2) im Kraftfahrzeug (10) und/oder in einem externen Fahrzeugdiagnosesystem (11) und/oder über die Kommunikationsschnittstelle (6) signalisiert wird.

7. Verfahren nach einem der vorangegangenen Ansprüche, **dadurch gekennzeichnet, dass** über mindestens einen weiteren Steuerbefehl (S2) die Sperrung der Funktionen (F1, F2) aufgehoben werden kann.

8. Verfahren nach einem der vorangegangenen Ansprüche, **dadurch gekennzeichnet, dass** in Abhängigkeit mindestens eines Parameters die Sperrung automatisch aufgehoben wird.

9. Vorrichtung zur Beeinflussung von Funktionen (F1, F2) in einem Kraftfahrzeug, wobei mittels der Vorrichtung mindestens ein Steuerbefehl (S1) generierbar ist, mittels dessen mindestens eine Funktion (F1) mit Timer-Programmierung und/oder mindestens eine Funktion (F2), die über eine Kommunikationsschnitfstelle (6) fernbedienbar von außerhalb des Kraftfahrzeugs (10) aktiviert oder deaktiviert werden kann, sperrbar ist,
**dadurch gekennzeichnet, dass**
die Vorrichtung ein Modul (M) aufweist, das derart ausgebildet ist, dass Funktionen (F1) mit Timer-Programmierung und/oder Funktionen (F2), die über die Kommunikationsschnittstelle (6) aktivierbar sind, ermittelt werden.

## Claims

1. Method for activating or deactivating functions in a motor vehicle (10), wherein at least one communication interface (6) can be used to input a control signal for activating or deactivating at least one function, wherein at least one function (F1) comprises timer programming and/or at least one function (F2) can be activated or deactivated from outside the motor vehicle (10) by remote control via the communication interface (6), wherein at least one interface is used to input at least one control command (S1) that is used to disable activation or deactivation of the function (F1, F1) via the timer programming and/or via the communication interface (6),
**characterized in that**
a stored module is used in the motor vehicle (10) and/or in the vehicle diagnosis system (11) to ascertain functions (F1) with the timer programming and/or functions (F2) that are activable via the communication interface (6).

2. Method according to Claim 1, **characterized in that** the interface for disabling the functions is in the form of a vehicle diagnosis interface (9) and/or in the form of a user interface in the motor vehicle.

3. Method according to Claim 1 or 2, **characterized in that** the control command (S1) for disabling the functions (F1, F2) is transmitted centrally to a controller (3) in the motor vehicle (10), wherein this controller (3) informs the relevant controllers (1, 2) for performing the functions (F1, F2) that are to be disabled.

4. Method according to Claim 1 or 2, **characterized in that** the control command(s) (S1) is/are used to directly inform the relevant controllers (1, 2) for performing the functions (F1, F2) that are to be disabled.

5. Method according to one of the preceding claims, **characterized in that** the motor vehicle (10) is connected to an external server (8) via the communication interface (6), wherein the function (F1, F2) is disabled via the server (8).

6. Method according to one of the preceding claims, **characterized in that** the disabling of functions (F1, F2) is signalled in the motor vehicle (10) and/or in an external vehicle diagnosis system (11) and/or via the communication interface (6).

7. Method according to one of the preceding claims, **characterized in that** at least one further control command (S2) can be used to suspend the disabling of the functions (F1, F2).

8. Method according to one of the preceding claims, **characterized in that** at least one parameter is taken as a basis for automatically suspending the disabling.

9. Apparatus for influencing functions (F1, F2) in a motor vehicle, wherein the apparatus can be used to generate at least one control command (S1) that can be used to disable at least one function (F1) with timer programming and/or at least one function (F2) that can be activated or deactivated from outside the motor vehicle (10) by remote control via a communication interface (6),
**characterized in that**
the apparatus has a module (M) that is designed such that functions (F1) with timer programming and/or functions (F2) that are activable via the communication interface (6) are ascertained.

## Revendications

1. Procédé pour activer ou désactiver des fonctions dans un véhicule automobile (10), dans lequel un signal de commande pour l'activation ou la désactivation d'au moins une fonction peut être introduit par l'intermédiaire d'au moins une interface de communication (6), dans lequel au moins une fonction (F1) comprend une programmation d'horloge et/ou au moins une fonction (F2) peut être activée ou désactivée depuis l'extérieur du véhicule automobile (10) par télécommande via l'interface de communication (6), dans lequel on introduit par au moins une interface au moins une instruction (S1), au moyen de laquelle une activation ou une désactivation de la fonction (F1, F2) est bloquée par la programmation d'horloge et/ou par l'interface de communication (6), **caractérisé en ce que** l'on détermine, au moyen d'un module installé dans le véhicule automobile (10) et/ou dans le système de diagnostic du véhicule (11), des fonctions (F1) avec la programmation d'horloge et/ou des fonctions (F2), qui peuvent être activées par l'intermédiaire de l'interface de communication (6).

2. Procédé selon la revendication 1, **caractérisé en ce que** l'interface destinée au blocage des fonctions est configurée sous forme d'interface de diagnostic de véhicule (9) et/ou sous forme d'interface de commande dans le véhicule automobile.

3. Procédé selon la revendication 1 ou 2, **caractérisé en ce que** l'on transmet l'instruction (S1) de blocage des fonctions (F1, F2) de façon centralisée à un appareil de commande (3) dans le véhicule automobile (10), dans lequel cet appareil de commande (3) informe les appareils de commande concernés (1, 2) en vue de l'exécution des fonctions à bloquer (F1, F2).

4. Procédé selon la revendication 1 ou 2, **caractérisé en ce que** les appareils de commande concernés (1, 2) sont informés directement par la ou des instruction(s) (S1) en vue de l'exécution des fonctions à bloquer (F1, F2).

5. Procédé selon l'une quelconque des revendications précédentes, **caractérisé en ce que** le véhicule automobile (10) est relié à un serveur externe (8) par l'intermédiaire de l'interface de communication (6), dans lequel le blocage de la fonction (F1, F2) est effectué via le serveur (8).

6. Procédé selon l'une quelconque des revendications précédentes, **caractérisé en ce que** le blocage de fonctions (F1, F2) est signalé dans le véhicule automobile (10) et/ou dans un système externe de diagnostic de véhicule (11) et/ou par l'intermédiaire de l'interface de communication (6).

7. Procédé selon l'une quelconque des revendications précédentes, **caractérisé en ce que** le blocage des fonctions (F1, F2) peut être levé par au moins une autre instruction (S2).

8. Procédé selon l'une quelconque des revendications précédentes, **caractérisé en ce que** le blocage est levé automatiquement en fonction d'au moins un paramètre.

9. Dispositif pour modifier des fonctions (F1, F2) dans un véhicule automobile, dans lequel au moins une instruction (S1) peut être générée au moyen du dispositif, au moyen de laquelle au moins une fonction (F1) avec une programmation d'horloge et/ou au moins une fonction (F2), qui peut être activée ou désactivée depuis l'extérieur du véhicule automobile (10) par télécommande via une interface de communication (6), peut être bloquée, **caractérisé en ce que** le dispositif présente un module (M), qui est configuré de telle manière que l'on détermine des fonctions (F1) avec une programmation d'horloge et/ou des fonctions (F2), qui peuvent être activées via l'interface de communication (6).
